(19)

Europäisches
Patentamt
European
Patent Office
Office européen
des brevets

(11) **EP 4 450 541 A1**

(12) **EUROPEAN PATENT APPLICATION**

(43) Date of publication:
    **23.10.2024 Bulletin 2024/43**

(21) Application number: **24161640.8**

(22) Date of filing: **06.03.2024**

(51) International Patent Classification (IPC):
    **C08J 5/18** (2006.01)      **C08L 67/04** (2006.01)

(52) Cooperative Patent Classification (CPC):
    (C-Sets available)
    **C08L 67/04; C08J 5/18;** C08J 2367/04;
    C08J 2423/08; C08J 2433/06; C08L 2201/14;
    C08L 2203/16; C08L 2205/03            (Cont.)

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority: **18.04.2023 KR 20230050529**

(71) Applicant: **SK Innovation Co., Ltd.
    Seoul 03188 (KR)**

(72) Inventors:
    • **LEE, Sang Yeup
      34124 Daejeon (KR)**
    • **KIM, Do Young
      34124 Daejeon (KR)**

(74) Representative: **Frick, Robert
    Lorenz Seidler Gossel
    Rechtsanwälte Patentanwälte
    Partnerschaft mbB
    Widenmayerstraße 23
    80538 München (DE)**

(54) **POLY(GLYCOLIC ACID)-CONTAINING RESIN COMPOSITION AND FILM INCLUDING THE SAME**

(57)    A poly(glycolic acid)-containing resin composition includes a poly(glycolic acid), a zinc-containing ionomer (Zn ionomer), and an ethylene-based terpolymer. A film including the poly(glycolic acid)-containing resin composition is provided. The poly(glycolic acid)-containing resin composition and the film can be widely applied in the field of green technologies such as a biodegradable resin, a biodegradable food packaging film, a biodegradable sanitary product, and other biodegradable plastics.

EP 4 450 541 A1

(52) Cooperative Patent Classification (CPC): (Cont.)

C-Sets
**C08L 67/04, C08L 23/0884, C08L 23/0876;**
**C08L 67/04, C08L 33/064, C08L 33/068**

**Description**

BACKGROUND

1. Field

The disclosure of the present application relates to a poly(glycolic acid)-containing resin composition and a film including the same.

2. Description of the Related Art

A biodegradable resin is a resin that can be decomposed by other organic organisms such as bacteria and microorganisms. As environmental pollutions by conventional non-degradable polymers are increasing, demands for the biodegradable resin as a substitute for the non-degradable resin are also increasing. Additionally, the biodegradable resin has recently been used in various industrial fields such as a packaging industry, an electronic industry, an automobile industry, a building material industry, a marine industry, a stationery industry, a pulp/paper industry, etc.

Examples of the biodegradable resins include poly(glycolic acid) (PGA), poly(butylene succinate) (PBS), polyhydroxyalkanoate (PHA), polylactic acid (PLA), etc. PGA may be synthesized by a polymerization of glycolic acid. PGA may have enhanced biodegradability and may have high gas barrier properties by a linear resin structure.

Additionally, the PGA resin has an internal ester bond to have a high crystallinity, thereby providing improved mechanical strength and high brittleness.

However, the PGA resin has a high melting point and a low melt strength, and may be easily decomposed by heat and moisture. Accordingly, a film including the PGA resin may not be easily formed.

SUMMARY

According to an aspect of the present invention, there is provided a poly(glycolic acid)-containing resin composition providing improved barrier properties.

According to an aspect of the present invention, there is provided a film formed from the resin composition and providing improved barrier properties.

A poly(glycolic acid)-containing resin composition includes a poly(glycolic acid), a zinc-containing ionomer, and an ethylene-based terpolymer.

In some embodiments, the zinc-containing ionomer may include a terpolymer of ethylene, zinc (meth)acrylate and (meth)acrylic acid.

In some embodiments, the ethylene-based terpolymer may include a copolymer of ethylene, glycidyl methacrylate and an alkyl acrylate.

In some embodiments, a content of the poly(glycolic acid) may be in a range from 60 wt% to 98 wt% based on a total weight of the poly(glycolic acid)-containing resin composition.

In some embodiments, a content of the zinc-containing ionomer may be in a range from 1 wt% to 39 wt% based on a total weight of the poly(glycolic acid)-containing resin composition.

In some embodiments, a content of the ethylene-based terpolymer may be in a range from 1 wt% to 39 wt% based on a total weight of the poly(glycolic acid)-containing resin composition.

In some embodiments, a sum of a content of the zinc-containing ionomer and a content of the ethylene-based terpolymer may be in a range from 2 wt% to 40 wt% based on a total weight of the poly(glycolic acid)-containing resin composition.

In some embodiments, a content of the poly(glycolic acid) may be greater than a sum of a content of the zinc-containing ionomer and a content of the ethylene-based terpolymer based on a total weight of the poly(glycolic acid)-containing resin composition.

In some embodiments, the poly(glycolic acid)-containing resin composition may have a melt viscosity of 200 Pa s to 10,000 Pa s measured under conditions of 230°C, a 5% strain and a frequency of 0.1 Hz.

In some embodiments, the poly(glycolic acid)-containing resin composition may have a melt flow index of 1 g/10 min to 200 g/10 min measured at 230°C and a load of 2.16 kg.

A film formed from the poly(glycolic acid)-containing resin composition according to the above-described embodiments is provided.

In some embodiments, a thickness of the film may be in a range from of 50 $\mu$m to 250 $\mu$m.

In some embodiments, an oxygen permeability measured at a relative humidity of 50% and 25°C of the film may be 200 $g/m^2 \cdot day$ or less.

In some embodiments, an oxygen permeability of the film may satisfy Formula 1.

[Formula 1]

$$OTR(PGA\text{-}Poly) \; < \; 0.1(x \cdot OTR(PGA) + (1\text{-}x) \cdot OTR(Poly))$$

In Formula 1, OTR(PGA-Poly) is an oxygen permeability of the film formed from the poly(glycolic acid)-containing resin composition, OTR(PGA) is an oxygen permeability of a film containing only poly(glycolic acid), OTR(Poly) is an oxygen permeability of a film containing a resin that includes only the zinc-containing ionomer or the ethylene-based ternary copolymer, and x is $0.6 \leq x < 1$.

A poly(glycolic acid)-containing resin composition according to embodiments of the present disclosure may include poly(glycolic acid) (PGA), a Zn ionomer (ZnIO), and an ethylene-based ternary copolymer. Accordingly, the poly(glycolic acid)-containing resin composition may have an increased molecular weight and may have improved impact resistance. Additionally, the polyglycolic acid-containing resin composition may have a low melt flow index to have improved film-forming properties.

The poly(glycolic acid)-containing resin composition may contain PGA in a predetermined amount. Accordingly, biodegradable and gas barrier properties of a film including the poly(glycolic acid)-containing resin composition may be improved, and processability may also be improved.

A film according to embodiments of the present disclosure may include the poly(glycolic acid)-containing resin composition. Accordingly, a gas permeation path at an inside of the film may become complex, and a gas permeability may be reduced.

The poly(glycolic acid)-containing resin composition and the film of the present disclosure may be widely applied in the field of green technologies such as a biodegradable resin, a biodegradable food packaging film, a biodegradable sanitary product, and other biodegradable plastics to which a biodegradable composition may be used. The poly(glycolic acid)-containing resin composition and the film of the present disclosure may suppress earth pollution, water pollution, air pollution, etc., and may be used in eco-friendly materials such as eco-friendly disposable products.

BRIEF DESCRIPTION OF THE DRAWINGS

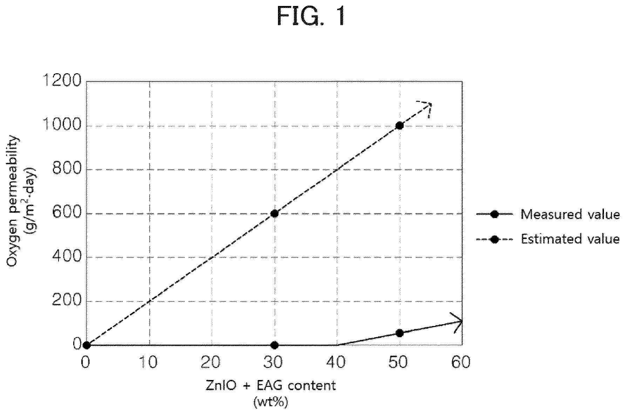

FIG. 1 is a graph showing measured values of oxygen permeability and estimated values of oxygen permeability of a film in accordance with example embodiments.

DETAILED DESCRIPTION OF THE EMBODIMENTS

Embodiments of the present invention provide a poly(glycolic acid)-containing resin composition and a film formed from the poly(glycolic acid)-containing resin composition.

Hereinafter, the present invention will be described in detail with reference to the accompanying drawings. However, those skilled in the art will appreciate that such embodiments described with reference to the accompanying drawings are provided to further understand the spirit of the present invention and do not limit subject matters to be protected as disclosed in the detailed description and appended claims.

According to embodiments, the poly(glycolic acid)-containing resin composition may include a poly(glycolic acid)(PGA), a Zn-ionomer (ZnIO) and an ethylene-based ternary copolymer.

The PGA is a biodegradable polymer having a linear structure with an ester bond, and may have high biodegradability. Additionally, the PGA may have high crystallinity by a hydrogen bonding between PGA polymers. Accordingly, gas barrier properties of the poly(glycolic acid)-containing resin composition may be improved.

The ZnIO refers to a polymer containing zinc that is a transition metal, and has low moisture absorbance and moisture content. Additionally, structural stability of the poly(glycolic acid)-containing resin composition may be improved by a coordination bonding with the ester group of the PGA.

The ethylene-based ternary copolymer may be obtained by copolymerizing three basic monomers including a monomer derived from ethylene. The ethylene-based ternary copolymer may be cross-linked with the PGA and the ZnIO to improve structural stability.

In some embodiments, the ZnIO may include a ternary copolymer of ethylene, zinc (meth)acrylate and (meth)acrylic acid.

The ternary copolymer of ethylene, zinc (meth)acrylate and (meth)acrylic acid may having a structure in which a zinc ion ($Zn^{2+}$) and a carboxylate anion (-COO-) are ion-bonded. A zinc ion of the ternary copolymer of ethylene, zinc (meth)acrylate and (meth)acrylic acid is a transition metal ion and may be coordinate-bonded to the ester group of the PGA. Accordingly, the ternary copolymer of ethylene, zinc (meth)acrylate and (meth)acrylic acid may be included in the poly(glycolic acid)-containing resin composition to improve durability and melt strength.

In an embodiment, a content of an ethylene monomer in the ternary copolymer of ethylene, zinc (meth)acrylate and (meth)acrylic acid may be in a range from 70 weight percent (wt%) to 98 wt%, from 73 wt% to 95 wt%, or from 76 wt% to 92 wt%.

In an embodiment, a content of a zinc (meth)acrylate monomer in the ternary copolymer of ethylene, zinc (meth)acrylate and (meth)acrylic acid may be in a range from 1 wt% to 20 wt%, from 1 wt% to 17 wt%, or from 1 wt% to 14 wt%.

In an embodiment, a content of a (meth)acrylic acid monomer of the ternary copolymer of ethylene, zinc (meth)acrylate and (meth)acrylic acid may be in a range from 1 wt% to 29 wt%, from 4 wt% to 26 wt%, or from 7 wt% to 23 wt%.

In some embodiments, the ethylene-based ternary copolymer may include a copolymer (EAG) of ethylene, glycidyl methacrylate and an alkyl acrylate.

The EAG is an ethylene-based polymer containing a glycidyl group, and the glycidyl group of the EAG may be included in the poly(glycolic acid)-containing resin composition to be bonded to at least one carboxyl group of the PGA and ZnIO.

Accordingly, the poly(glycolic acid)-containing resin composition may be extended, and the polymer structure may become complex. Accordingly, melt strength and durability of the poly(glycolic acid)-containing resin composition may be improved, and a processibility may be improved.

In an embodiment, a content of an ethylene monomer in the EAG may be in a range from 50 wt% to 88 wt%, from 55 wt% to 82 wt%, or from 57 wt% to 78 wt%.

In an embodiment, a content of an glycidyl methacrylate monomer in the EAG may be in a range from 1 wt% to 30 wt%, from 3 wt% to 25 wt%, or from 5 wt% to 20 wt%.

In an embodiment, a content of an alkyl acrylate monomer in the EAG may be in a range from 10 wt% to 48 wt%, from 15 wt% to 42 wt%, or from 17 wt% to 38 wt%.

In some embodiments, a content of the PGA may be in a range from 60 wt% to 98 wt%, from 60 wt% to 93 wt%, from 60 wt% to 88 wt%, or from 65 wt% to 85 wt%, based on a total weight of the poly(glycolic acid)-containing resin composition.

Within the above content range, the PGA may be distributed entirely throughout the poly(glycolic acid)-containing resin composition. Accordingly, the poly(glycolic acid)-containing resin composition may have improved melt strength, durability and processability while maintaining low gas permeability. Additionally, biodegradability of the poly(glycolic acid)-containing resin composition may be improved by the PGA.

In some embodiments, a content of the ZnIO may be in a range from 1 wt% to 39 wt%, from 5 wt% to 38 wt%, from 7 wt% to 30 wt%, or from 8 wt% to 20 wt%, based on the total weight of the poly(glycolic acid)-containing resin composition.

Within the above content range, increasing of the gas permeability of the poly(glycolic acid)-containing composition due to an increase of the ZnIO and a decrease of the PGA may be prevented. Additionally, the zinc ions of the ZnIO may be coordinated with the ester group of the PGA to improve durability of the poly(glycolic acid)-containing composition. Further, hygroscopicity of the poly(glycolic acid)-containing resin composition may be reduced, thereby preventing the polymer structure from being collapsed due to high biodegradability of the poly(glycolic acid)-containing resin composition. Thus, structural stability of the poly(glycolic acid)-containing resin composition may be improved.

In some embodiments, a content of the ethylene-based ternary copolymer (e.g., the EAG) may be in a range from 1 wt% to 39 wt%, from 2 wt% to 35 wt%, from 5 wt% to 33 wt%, or from 7 wt% to 27 wt% based on the total weight of the poly(glycolic acid)-containing resin composition.

Within the above content range, the ethylene-based ternary copolymer (e.g., the EAG) may be stably cross-linked with the carboxyl group of the PGA and the ZnIO. Thus, melt strength and processability of the poly(glycolic acid)-containing resin composition may be further improved.

In an embodiment, a sum of the content of the ZnIO and the content of the ethylene-based ternary copolymer may be in a range from 2 wt% to 40 wt%, from 5 wt% to 40 wt%, from 10 wt% to 35 wt%, or from 10 wt% to 30 wt% based on the total weight of the poly(glycolic acid)-containing resin composition.

Within the above content range, a content of the PGA included in the poly(glycolic acid)-containing resin composition may be 60 wt% or more, 65 wt% or more, or 70 wt% or more. Accordingly, biodegradability of the poly(glycolic acid)-containing resin composition may not be deteriorated, and gas permeability may be reduced and processability may be enhanced.

In some embodiments, the content of the PGA may be greater than the sum of the content of ZnIO and the content of the ethylene-based ternary copolymer. Accordingly, biodegradability, gas barrier properties and durability of the poly(glycolic acid)-containing resin composition may be enhanced.

As described above, the contents of the PGA, the ZnIO and the ethylene-based ternary copolymer included in the poly(glycolic acid)-containing resin composition may be controlled so that a melt viscosity and a melt flow index may be adjusted.

In some embodiments, the melt viscosity of the poly(glycolic acid)-containing resin composition may be in a range from 50 Pa·s to 10,000 Pa·s, from 100 Pa·s to 8,000 Pa s, from 200 Pa s to 6,000 Pa s.

The melt viscosity may be measured at a strain of 5% and a frequency of 0.1Hz of a sample prepared by pressing the poly(glycolic acid)-containing resin composition to a thickness of 2 mm at 230°C.

In an embodiment, the melt flow index of the poly(glycolic acid)-containing resin composition may be in a range from 1 g/10min to 200 g/10min, from 1 g/10min to 100 g/10min, and from 2 g/10min to 50 g/10min.

The melt flow index may be measured at a temperature of 230°C and a load of 2.16 kg according to ASTM D1238.

The melt viscosity and the melt flow index may be maintained within the above range, a flexibility of the poly(glycolic acid)-containing resin composition may be improved compared to that of the PGA. Thus, processability may be improved in a processing such as a foaming-expansion molding, an injection molding, a compression molding, a casting film molding, an inflation film molding, etc. Accordingly, processability from the poly(glycolic acid)-containing resin composition to a film may be improved.

The above-described polyglycolic acid-containing resin composition may be formed by drying and kneading a mixture of the PGA, the ZnIO and the ethylene-based ternary copolymer.

In example embodiments, the PGA, the ZnIO and the ethylene-based ternary copolymer may be introduced into a hopper dryer.

The PGA may be introduced and dried in the hopper dryer maintained at a temperature condition, e.g., ranging from 60°C to 100°C, from 70°C to 90°C, or from 75°C to 85°C. The ZnIO may be introduced and dried in the hopper dryer maintained at a temperature condition, e.g., ranging from 30°C to 70°C, from 40°C to 60°C, or from 45°C to 55°C. The ethylene-based terpolymer (e.g., EAG) may be introduced and dried in the hopper dryer maintained at a temperature conditions, e.g., ranging from 20°C to 60°C, from 30°C to 50°C, or from 35°C to 45°C.

The PGA, the ZnIO and the ethylene-based ternary copolymer may be dried for, e.g., 10 hours to 14 hours, 11 hours to 13 hours, or 11.5 hour to 12.5 hours. In the above range, the PGA, the ZnIO and the ethylene-based ternary copolymer may be sufficiently dried to suppress a side reaction in the kneading process of the PGA, the ZnIO and the ethylene-based ternary copolymer.

The dried PGA, ZnIO and ethylene-based ternary copolymer may be introduced into a chamber of an internal mixer. The chamber of the internal mixer may be maintained at a temperature, e.g., ranging from 220°C to 260°C, from 225°C to 250°C, or from 230°C to 240°C.

When the dried PGA, ZnIO and the ethylene-based ternary copolymer are introduced into the internal mixer, a rotor in the internal mixer may be rotated at a rate, e.g., ranging from 10 rpm to 70 rpm, from 20 rpm to 60 rpm, or from 30 rpm to 50 rpm.

Within the above range, the PGA, the ZnIO and the ethylene-based ternary copolymer may be kneaded without aggregating with each other.

After the introduction of the dried PGA, ZnIO and the ethylene-based ternary copolymer, the kneading may be performed while maintaining the rotor at a rate, e.g., from 60 rpm to 100 rpm, from 70 rpm to 90 rpm, or from 75 rpm to 85 rpm. The kneading may be performed for, e.g., 1 minute to 5 minutes, 2 minutes to 4 minutes, or 2.5 minutes to 3.5 minutes.

In the above range, the PGA, the ZnIO and the ethylene-based ternary copolymer may be uniformly distributed and kneaded.

The kneaded product as described above may be recovered to obtain the poly(glycolic acid)-containing resin composition.

Although the kneading process is described as being performed using the internal mixer, the kneading process is not limited thereto. For example, the dried PGA, the ZnIO and the ethylene-based ternary copolymer may be introduced into a uniaxial extruder or a twin-screw extruder, and the melt and kneading may be performed. The resin composition discharged through an outlet of the uniaxial extruder or the twin-screw extruder may be cut in a pelletizer to obtain the poly(glycolic acid)-containing resin composition in the form of a pellet.

In example embodiments, a film may be formed from the above-described poly(glycolic acid)-containing resin composition. Accordingly, gas permeability of the film may be reduced, and biodegradability and durability may be improved.

In some embodiments, a thickness of the film may be in a range from 50 $\mu$m to 250 $\mu$m, from 100 $\mu$m to 200 $\mu$m, or from 120 $\mu$m to 180 $\mu$m. In the above range, gas permeability of the film may be sufficiently reduced.

In an embodiment, the film may have an oxygen permeability of 200g/m$^2$·day or less, 100g/m$^2$·day or less, or 30g/m$^2$·day or less. A lower limit of the oxygen permeability of the film is not limited, but, e.g., the film may have the oxygen permeability of 1g/m$^2$·day or more, 2g/m$^2$·day or more, 5g/m$^2$·day or more, or 10g/ m$^2$·day or more.

The oxygen permeability may be measured under a relative humidity of 50% and a temperature of 25°C.

In the above range, blocking properties against a gas (e.g., oxygen) may be improved when using the film as a barrier film, and thus a product may be sufficiently protected by the barrier film.

When the PGA is included in an amount of 60 wt% or more in the poly(glycolic acid)-containing resin composition, the PGA may be distributed throughout an entire area of the poly(glycolic acid)-containing resin composition. Accordingly, gas barrier properties of the film including the poly(glycolic acid)-containing resin composition may be enhanced due to the high gas barrier properties of the PGA.

Thus, the PGA may be included in an amount of 60 wt% or more in the poly(glycolic acid)-containing resin composition, so that the oxygen permeability of the poly(glycolic acid)-containing resin composition may be lowered. For example, the oxygen permeability of the poly(glycolic acid)-containing resin composition may be lower than an arithmetic mean value of oxygen permeabilities of polymer components contained in the poly(glycolic acid)-containing resin composition.

In some embodiments, the oxygen permeability of the film may satisfy Formula 1 below.

$$[\text{Formula 1}]$$

$$\text{OTR(PGA-Poly)} \ < \ 0.1(x \cdot \text{OTR(PGA)} + (1-x) \cdot \text{OTR(Poly)})$$

In Formula 1, OTR(PGA-Poly) is an oxygen permeability of the film formed from the poly(glycolic acid)-containing resin composition, OTR(PGA) is an oxygen permeability of a film containing only poly(glycolic acid), OTR(Poly) is an oxygen permeability of a film containing a resin that includes only the zinc-containing ionomer or the ethylene-based ternary copolymer, and x is $0.6 \leq x < 1$.

The film may be provided as, e.g., a barrier film of packaging materials of various products such as a food packaging material, a battery packaging material, etc.

The above-described film may be prepared from the poly(glycolic acid)-containing resin composition.

In example embodiments, the poly(glycolic acid)-containing resin composition may be pressed by applying a pressure to obtain a film.

In some embodiments, a temperature for the press may be maintained in a range from 200°C to 260°C, from 210°C to 250°C, from 220°C to 240°C, or from 225°C to 235°C. In this range, the film including the poly(glycolic acid)-containing resin composition may be molded and transformed.

In some embodiments, the poly(glycolic acid)-containing resin composition may be pressed at a pressure ranging from 10 MPa to 30 MPa, from 15 MPa to 25 MPa, or from 18 MPa to 22 MPa for 1 minute to 3 minutes, or 1.5 minutes to 2.5 minutes.

In the above range, the film may be manufactured to have the above-described thickness. Accordingly, the film having a thin-layered structure may be manufactured while reducing the oxygen permeability.

The formation of the film may include the press as describe above, but the film formation method is not limited thereto. For example, the poly(glycolic acid)-containing resin composition melted in an extruder may be extruded from a t-die to a cooling roll, and then cooled to obtain the film (e.g., a casting method). For example, the poly(glycolic acid)-containing resin composition may be cooled by an air contact through an air ring in a ring-shaped die (e.g., a spiral die, etc.) to obtain the film (e.g., a blowing method).

Hereinafter, experimental examples are provided to help understanding of the present invention, but these embodiments are merely illustrative of the present invention and do not limit the scope of the attached patent claims, and it is obvious to those skilled in the art that various changes and modifications to the embodiments are possible within the scope of the present invention. These modifications are to be interpreted as being within the scope of the attached claims.

Examples and Comparative Examples

Example 1

(1) Preparation of raw materials for poly(glycolic acid)-containing resin composition

A dried PGA was prepared by drying poly(glycolic acid) for 12 hours in a hopper dryer set at 80°C.

A ternary copolymer of ethylene, zinc acrylate and acrylic acid was dried in a hopper dryer set to 50°C for 12 hours to prepare a ternary copolymer of ethylene, zinc acrylate and acrylic acid. Contents of an ethylene monomer, a zinc acrylate monomer and an acrylic acid monomer in the ternary copolymer of ethylene, zinc acrylate and acrylic acid were about 86.5 wt%, 6.75 wt% and 6.75 wt%, respectively.

A ternary copolymer (EAG) of ethylene, glycidyl methacrylate and methyl acrylate was dried in a hopper dryer set to 40°C for 12 hours to prepare a dried EAG. Contents of an ethylene monomer, a glycidyl methacrylate monomer, and methyl acrylate monomer of the EAG were 68 wt%, 8 wt%, and 24 wt%, respectively.

A Mitsui hot air dryer was used as the hopper dryer.

(2) Preparation of the poly(glycolic acid)-containing resin composition

The dried PGA, the dried ternary copolymer of ethylene and zinc acrylate, and the dried EAG were introduced into an internal mixer chamber in a ratio of 80 wt%, 10 wt% and 10 wt%, respectively. A temperature at an inside of the internal mixer chamber was maintained at 230°C, and a rotor of the inner mixer was rotated at a rate of 40 rpm.
Thereafter, the rate of the rotor was increased to 80 rpm and kneading was performed for 3 minutes to prepare a poly(glycolic acid)-containing resin composition as a kneading product.

Brabander Majoring Mixer W50 was use ass the internal mixer.

(3) Film formation

The poly(glycolic acid)-containing resin composition was pressurized at a pressure of 20 MPa for 2 minutes using a press set to 230°C to prepare a film.

Examples 2 to 7 and Comparative Examples 1 to 6

Poly(glycolic acid)-containing resin compositions and films of Examples 2 to 7 and Comparative Examples 1 to 6 were prepared by the same methods as those in Example 1, except that type of the PGA and a weight ratio of the dried PGA, the dried ternary copolymer of ethylene, zinc acrylate and acrylic acid, and the dried EAG were adjusted as shown in Table 1 below.

[Table 1]

| | PGA | | copolymer of ethylene and zinc(meth)acrylate (wt%) | EAG (wt%) |
|---|---|---|---|---|
| | Type | content (wt%) | | |
| Example 1 | A | 80 | 10 | 10 |
| Example 2 | A | 70 | 10 | 20 |
| Example 3 | A | 70 | 20 | 10 |
| Example 4 | A | 60 | 30 | 10 |
| Example 5 | A | 60 | 20 | 20 |
| Example 6 | A | 50 | 30 | 20 |
| Example 7 | B | 80 | 5 | 15 |
| Comparative Example 1 | A | 100 | 0 | 0 |
| Comparative Example 2 | A | 0 | 100 | 0 |
| Comparative Example 3 | A | 0 | 0 | 100 |
| Comparative Example 4 | A | 0 | 50 | 50 |
| Comparative Example 5 | A | 50 | 50 | 0 |
| Comparative Example 6 | B | 100 | 0 | 0 |

The types of PGA listed in Table 1 are as follows:

A: Poly(glycolic acid) having a number average molecular weight (Mn) of 35,000 to 45,000, and a weight average molecular weight (Mw) of 80,000 to 95,000 measured by Gel Permeation Chromatography (GPC).

B: Poly(glycolic acid) having a number average molecular weight (Mn) of 70,000 to 80,000 and a weight average molecular weight (Mw) of 160,000 to 180,000 measured by Gel Permeation Chromatography (GPC).

The gel permeation chromatography was performed by dissolving poly(glycolic acid) in hexafluoro isopropyl alcohol (HFIP), filtering the solution with a polytetrafluoroethylene (PTFE) filter and injecting into Tosoh EcoSEC HLC-8320 GPC, and poly(methyl methacrylate, PMMA) was used as a standard material.

Experimental Example 1

FIG. 1 is a graph showing measured and estimated values of an oxygen permeability of a film according to a sum of the content of the ternary copolymer of ethylene, zinc acrylate and acrylic acid and the content of the EAG contained in the poly(glycolic acid)-containing resin composition.

The estimated value of the oxygen permeability represents an arithmetic average of the oxygen permeability of the PGA, the oxygen permeability of the ternary copolymer of ethylene, zinc acrylate and acrylic acid and the oxygen permeability of the EAG included in the poly(glycolic acid)-containing resin composition according to the weight ratios thereof.

The measured value of the oxygen permeability represents a measured value of the oxygen permeability of the film including the poly(glycolic acid)-containing resin composition. Specifically, the measured values of the oxygen permeability of the film of Example 1, Example 2, Example 5 and Example 6 are provided.

Referring to FIG. 1, the estimated value of the oxygen permeability of the film was calculated as being linearly increased according to the sum of the content of the ternary copolymer of ethylene, zinc acrylate and acrylic acid, and the content of EAG.

However, when the sum of the content of the ternary copolymer of ethylene, zinc acrylate and acrylic acid, and the content of the EAG was 40 wt% or less (the content of the PGA was more than 60 wt%), the oxygen permeability was low. Additionally, when the sum of the ternary copolymer content of ethylene, zinc acrylate, and acrylic acid and the content of the EAG exceeded 40 wt%, the oxygen permeability was measured to increase in proportion to the content.

Experimental Example 2

(1) Measurement of melt viscosity

The poly(glycolic acid)-containing resin composition prepared according to each of Examples and Comparative Examples was pressed to a thickness of 2 mm at a temperature of 230°C, and then a melt viscosity was measured using a viscosity measuring apparatus (TAARES).

The viscosity measuring apparatus was set under conditions of 230°C, 5% strain and a frequency of 0.1 Hz to 400 Hz, and a viscosity value measured at a frequency of 0.1 Hz was designated as a melt viscosity.

(2) Measurement of melt flow index

A melt flow index of each poly(glycolic acid)-containing resin composition prepared according to the above-described Examples and Comparative Examples was measured at a temperature of 230°C and a load of 2.16 kg according to ASTM D1238.

(3) Measurement of oxygen permeability

Each film according to the above-described Examples and Comparative Examples was mounted on an oxygen permeability measuring apparatus (MOCON OX TRANS model 2/61) to measure an oxygen permeability.

The oxygen permeability was measured at a relative humidity of 50% and a temperature of 25°C for 12 hours, and a value at a point where the permeability was stabilized was designated as the oxygen permeability.

A measurable upper limit of the oxygen permeability was 1,200 $g/m^2 \cdot day$, and the oxygen permeability of the film which could not be measured beyond the upper limit was marked as 'excess'.

The evaluation results are shown in Table 2 below.

[Table 2]

| | melt viscosity (Pa·s) | melt flow index (g/10min) | oxygen permeability | |
| --- | --- | --- | --- | --- |
| | | | $g/m^2 \cdot day$ | $g \cdot \mu m/m^2 \cdot day$ |
| Example 1 | 213.3 | 134.9 | 0.4 | 110 |
| Example 2 | 658.7 | 65.4 | 0.5 | 130 |
| Example 3 | 521.9 | 123.5 | 0.5 | 120 |

(continued)

|  | melt viscosity (Pa·s) | melt flow index (g/10min) | oxygen permeability | |
|---|---|---|---|---|
|  |  |  | g/m$^2$·day | g·$\mu$m/m$^2$·day |
| Example 4 | 1196.9 | 86.3 | 25 | 5600 |
| Example 5 | 957.2 | 57.4 | 40 | 9000 |
| Example 6 | 1729.9 | 47.8 | 150 | 33800 |
| Example 7 | 6272.6 | 4.5 | 0.4 | 64.2 |
| Comparative Example 1 | 24.8 | 300 | 0.2 | 40 |
| Comparative Example 2 | 3796.7 | 5.7 | excess | excess |
| Comparative Example 3 | 1732.9 | 11.5 | excess | excess |
| Comparative Example 4 | - | 1.2 | excess | excess |
| Comparative Example 5 | 2694.6 | 71.3 | 70 | 15400 |
| Comparative Example 6 | 243.4 | 12.5 | 0.4 | 65.6 |

Referring to Table 2, the films according to Examples provided the oxygen permeability of 200 g/m$^2$·day or less.
In Examples 4 and 5 where the content of the PGA t was reduced to 60 wt%, the oxygen permeability was relatively increased.
In Example 6, in which the content of the PGA content was less than 60 wt%, the oxygen permeability was relatively increased.
In Example 7 where the molecular weight of the PGA was increased, the melt viscosity was relatively increased and the melt flow index was relatively decreased.
In Comparative Example 1 using only the PGA, the melt viscosity of the poly(glycolic acid)-containing resin composition was decreased and the melt flow index was increased.
In Comparative Example 2 using only the ternary copolymer of ethylene, zinc acrylate and acrylic acid, the oxygen permeability was greater than 1,200 g/m$^2$·day.
In Comparative Example 3 using only the EAG, the oxygen permeability was greater than 1,200 g/m$^2$·day.
In Comparative Example 4 where the copolymer of ethylene and zinc (meth)acrylate and the EAG were kneaded without using the PGA, the oxygen permeability exceeded 1,200 g/m$^2$·day.

**Claims**

1.    A poly(glycolic acid)-containing resin composition, comprising:

   a poly(glycolic acid);
   a zinc-containing ionomer; and
   an ethylene-based terpolymer.

2.    The poly(glycolic acid)-containing resin composition of claim 1, wherein the zinc-containing ionomer comprises a terpolymer of ethylene, zinc (meth)acrylate and (meth)acrylic acid.

3.    The poly(glycolic acid)-containing resin composition of claim 1 or 2, wherein the ethylene-based terpolymer includes a copolymer of ethylene, glycidyl methacrylate and an alkyl acrylate.

4.    The poly(glycolic acid)-containing resin composition of any preceding claim, wherein a content of the poly(glycolic acid) is in a range from 60 wt% to 98 wt% based on a total weight of the poly(glycolic acid)-containing resin composition.

5.    The poly(glycolic acid)-containing resin composition of any preceding claim, wherein a content of the zinc-containing ionomer is in a range from 1 wt% to 39 wt% based on a total weight of the poly(glycolic acid)-containing resin composition.

6. The poly(glycolic acid)-containing resin composition of any preceding claim, wherein a content of the ethylene-based terpolymer is in a range from 1 wt% to 39 wt% based on a total weight of the poly(glycolic acid)-containing resin composition.

7. The poly(glycolic acid)-containing resin composition of any preceding claim, wherein a sum of a content of the zinc-containing ionomer and a content of the ethylene-based terpolymer is in a range from 2 wt% to 40 wt% based on a total weight of the poly(glycolic acid)-containing resin composition.

8. The poly(glycolic acid)-containing resin composition of any preceding claim, wherein a content of the poly(glycolic acid) is greater than a sum of a content of the zinc-containing ionomer and a content of the ethylene-based terpolymer based on a total weight of the poly(glycolic acid)-containing resin composition.

9. The poly(glycolic acid)-containing resin composition of any preceding claim, wherein the poly(glycolic acid)-containing resin composition has a melt viscosity of 200 Pa·s to 10,000 Pa·s measured under conditions of 230°C, a 5% strain and a frequency of 0.1 Hz.

10. The poly(glycolic acid)-containing resin composition of any preceding claim, wherein the poly(glycolic acid)-containing resin composition has a melt flow index of 1 g/10 min to 200 g/10 min measured at 230° C and a load of 2.16 kg.

11. A film formed from the poly(glycolic acid)-containing resin composition of any preceding claim.

12. The film of claim 11, wherein a thickness of the film is in a range from of 50 $\mu$m to 250 $\mu$m.

13. The film of claim 12, wherein an oxygen permeability measured at a relative humidity of 50% and 25°C of the film is 200 g/m$^2$·day or less.

14. The film of any one of claims 11 to 13, wherein an oxygen permeability of the film satisfies Formula 1:

[Formula 1]

$$OTR(PGA\text{-}Poly) \ < \ 0.1(x{\cdot}OTR(PGA) + (1\text{-}x){\cdot}OTR(Poly))$$

wherein, in Formula 1, OTR(PGA-Poly) is an oxygen permeability of the film formed from the poly(glycolic acid)-containing resin composition, OTR(PGA) is an oxygen permeability of a film containing only poly(glycolic acid), OTR(Poly) is an oxygen permeability of a film containing a resin that includes only the zinc-containing ionomer or the ethylene-based ternary copolymer, and x is 0.6≤x<1.

# FIG. 1

Europäisches
Patentamt

European
Patent Office

Office européen
des brevets

# EUROPEAN SEARCH REPORT

Application Number

EP 24 16 1640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/259028 A1 (PLIMMER PETER [NZ] ET AL) 11 October 2012 (2012-10-11) | 1,3-14 | INV. C08J5/18 C08L67/04 |
| A | * paragraph [0046] - paragraph [0075]; claim 47; examples 40, 48; tables 1, 2, 5 * | 2 | |
| A | US 7 595 363 B2 (DU PONT [US]) 29 September 2009 (2009-09-29) * column 6, line 14 - column 9, line 17; claim 5; examples 9, 20; tables 3, 4 * | 1-14 | |
| A | US 2008/027178 A1 (URADNISHECK JULIUS [US]) 31 January 2008 (2008-01-31) * paragraph [0029] - paragraph [0087]; example 16 * | 1-14 | |

**TECHNICAL FIELDS SEARCHED (IPC)**

C08J
C08L

The present search report has been drawn up for all claims

| Place of search | Date of completion of the search | Examiner |
|---|---|---|
| The Hague | 30 August 2024 | Enescu, Cristina |

EPO FORM 1503 03.82 (P04C01)

## ANNEX TO THE EUROPEAN SEARCH REPORT
## ON EUROPEAN PATENT APPLICATION NO.

EP 24 16 1640

This annex lists the patent family members relating to the patent documents cited in  the above-mentioned European search report.
The members are as contained in the European Patent Office EDP file on
The European Patent Office is in no way liable for these particulars which are merely given for the purpose of information.

30-08-2024

| Patent document cited in search report | | Publication date | Patent family member(s) | | Publication date |
|---|---|---|---|---|---|
| US 2012259028 | A1 | 11-10-2012 | AU | 2010304033 A1 | 24-05-2012 |
| | | | EP | 2486096 A1 | 15-08-2012 |
| | | | US | 2012259028 A1 | 11-10-2012 |
| | | | WO | 2011043676 A1 | 14-04-2011 |
| US 7595363 | B2 | 29-09-2009 | US | 2007213466 A1 | 13-09-2007 |
| | | | WO | 2008030599 A2 | 13-03-2008 |
| US 2008027178 | A1 | 31-01-2008 | US | 2008027178 A1 | 31-01-2008 |
| | | | WO | 2008013699 A1 | 31-01-2008 |

EPO FORM P0459

For more details about this annex : see Official Journal of the European Patent Office, No. 12/82